# EUROPEAN PATENT APPLICATION

(11) **EP 4 583 178 A1**
(43) Date of publication of application: **09.07.2025**
(21) Application number: 24222699.1
(22) Date of filing: 22.12.2024
(51) Int. Cl.: H01M 4/04

(54) **ELECTRODE SHEET MANUFACTURING APPARATUS, MANUFACTURING METHOD USING THE SAME, AND ELECTRODE SHEET MANUFACTURED THEREBY**

(30) Priority: 03.01.2024 KR 20240000667
(71) Applicant: SK On Co., Ltd., Seoul 03161 (KR)
(72) Inventor: KIM, Min Hwan, 34124 Daejeon (KR)
(74) Representative: Stolmár & Partner Patentanwälte PartG mbB

(57) **Abstract**

An electrode sheet manufacturing apparatus according to an embodiment of the present disclosure may include: a first heating portion (30) partially heating a metal sheet (10); a coating portion (40) coating an electrode mixture (11a) on at least one surface of the metal sheet (10); a second heating portion (60) heating the metal sheet (10) coated with the electrode mixture (11a); and a pressurizing portion (70 applying pressure to the metal sheet (10) coated with the electrode mixture (11a) heated in the second heating portion (60).

## Description

### TECHNICAL FIELD

The present disclosure relates to an electrode sheet manufacturing apparatus, a manufacturing method using the same, and an electrode sheet manufactured thereby.

### BACKGROUND

Secondary battery cells, unlike primary batteries, may be charged and discharged, and may applied to devices within various fields such as digital cameras, mobile phones, laptop computers, and hybrid vehicles. Examples of the secondary batteries may include nickel-cadmium batteries, nickel-metal hydride batteries, nickel-hydrogen batteries, and lithium secondary batteries.

Generally, an electrode assembly of a secondary battery cell is formed by stacking electrode sheets and separators in a form of a plurality of layers.

Conventional electrode sheets are manufactured through a process of partially applying electrode active materials to a metal sheet and then pressurizing the electrode sheets using a rolling roll.

However, since the electrode active materials are partially applied to the metal sheet, there may be a difference in elongation between a portion coated with the electrode active materials and a portion not coated with the electrode active materials.

Due to the difference in elongation, problems such as bending or wrinkles formed in the electrode sheets pressurized by the rolling roll, or the breakage of electrode sheets may occur.

Since the breakage of the electrode sheets involves a process such as stopping an operation of the equipment and reconnecting the electrode sheet, this may act as a major factor in lowering yields.

### SUMMARY

According to an aspect of the present disclosure, provided is an electrode sheet manufacturing apparatus capable of suppressing breakage of electrode sheets during a manufacturing process, a manufacturing method using the same, and an electrode sheet manufactured thereby.

However, the technical aspects to be solved by example embodiments of the present disclosure are not limited to the above-mentioned aspects. Other aspects not mentioned herein will be clearly understood by those skilled in the art to which the present disclosure pertains from other descriptions of the specification, such as detailed descriptions.

An electrode sheet manufacturing apparatus of the present disclosure, a manufacturing method using the same, and an electrode sheet manufactured thereby may be widely applied to devices within green technology fields such as electric vehicles, battery charging stations, and solar and wind power generation using batteries. Additionally, the electrode sheet manufacturing apparatus of the present disclosure, the manufacturing method using the same, and the electrode sheet manufactured thereby may be used in eco-friendly electric vehicles, hybrid vehicles, or the like, to ameliorate the effects climate change by reducing air pollution and greenhouse gas emissions.

An electrode sheet manufacturing apparatus according to an example embodiment may include: a first heating portion partially heating a metal sheet; a coating portioncoating an electrode mixture on at least one surface of the metal sheet; a second heating portion heating the metal sheet coated with the electrode mixture; and a pressurizing portion applying pressure to the metal sheet coated with the electrode mixture heated in the second heating portion.

According to an embodiment, the metal sheet may include a stack portion, a region coated with the electrode mixture, and a non-coated portion, a region not coated with the electrode mixture, and the first heating portion may heat a portion corresponding to the stack portion.

According to an embodiment, the stack portion may include a first region disposed along a center of the stack portion and a second region disposed between the first region and the non-coated portion, and the first heating portion may heat the second region.

According to an embodiment, the first heating portion may include a non-contact heat source heating the metal sheet in an induction heating manner.

According to an embodiment, the first heating portion may heat the metal sheet to the same temperature as the second heating portion.

According to an embodiment, the coating portion may include a slot die supplying the electrode mixture to the metal sheet, and a drying portion drying the electrode mixture supplied to the metal sheet.

According to an embodiment, the pressurizing portion may include a pair of pressurizing rolls disposed on both surfaces of the metal sheet coated with the electrode mixture and applying pressure to the electrode mixture.

According to an embodiment, an electrode sheet manufacturing method may include: a first heating operation of partially heating a metal sheet supplied from an unwinder; a coating operation of coating an electrode mixture on at least one surface of the metal sheet; a second heating operation of heating the metal sheet coated with the electrode mixture; and a pressurizing operation of applying pressure to the electrode mixture coated on the metal sheet.

According to an embodiment, the metal sheet may include a stack portion, a region coated with the electrode mixture, and a non-coated portion, a region not coated with the electrode mixture, the stack portion may include a first region disposed along a center of the stack portion, and a second region disposed between the first region and the non-coated portion, and the first heating operation may be an operation of heating the second region.

According to an embodiment, the second heating operation may be an operation of heating the metal sheet for a period of time the same as or longer than the period of time of the first heating operation.

According to an embodiment, the metal sheet may include aluminum, and after the second heating operation, a difference in tensile strength between the second region and the non-coated region may be formed to be 5 kgf/mm² or less.

According to an embodiment, the metal sheet may include aluminum, and after the second heating operation, tensile strength of the non-coated region may be lower than tensile strength of the second region and may be formed to be 12 kgf/mm² or more.

According to an embodiment, the metal sheet may include aluminum, and after the second heating operation, tensile strength of the second region may be higher than tensile strength of the non-coated region and may be formed to be 26 kgf/mm² or less.

An electrode sheet according to the present disclosure is manufactured by the electrode sheet manufacturing method described above, and the metal sheet may include a stack portion, a region coated with the electrode mixture, and a non-coated portion, a region not coated with the electrode mixture, and the stack portion may include a first region disposed along a center of the stack portion, and a second region disposed between the first region and the non-coated portion, and in the metal sheet, a difference in tensile strength between the second region and the non-coated portion may be 5 kgf/mm² or less.

An electrode sheet manufacturing apparatus according to embodiments of the present disclosure and a manufacturing method using the same may reduce a difference in tensile strength between a stack portion and a non-coated portion of an electrode sheet, thereby minimizing the breakage of the non-coated portion of the electrode sheet during a battery cell manufacturing process.

The electrode sheet manufacturing apparatus according to embodiments of the present disclosure and the manufacturing method using the same may omit processes such as stopping an operation of the equipment and reconnecting the electrode sheet during an electrode manufacturing process, thereby increasing a yield.

### BRIEF DESCRIPTION OF DRAWINGS

Certain aspects, features, and advantages of the present disclosure are illustrated by the following detailed description with reference to the accompanying drawings.
FIG. 1 is a view schematically illustrating an electrode sheet manufacturing apparatus according to an embodiment.
FIG. 2 is a perspective view partially illustrating the manufacturing apparatus of FIG. 1.
FIG. 3 is a cross-sectional view of an electrode sheet along line I-I' of FIG 2.
FIG. 4 is a graph according to Table 1.

### DETAILED DESCRIPTION

Hereinafter, the present disclosure will be described in detail with reference to the attached drawings. However, this is merely exemplary and the present disclosure is not limited to the specific embodiments described as exemplary. In the attached drawings, some components are exaggerated, omitted, or schematically illustrated, and the size of each component does not entirely reflect an actual size. For example, the expressions "upper side," "upper portion," "lower side," "upper portion", "side surface," or the like, in this specification, are explained based on the drawings, and may be expressed differently when a direction of a corresponding object changes.

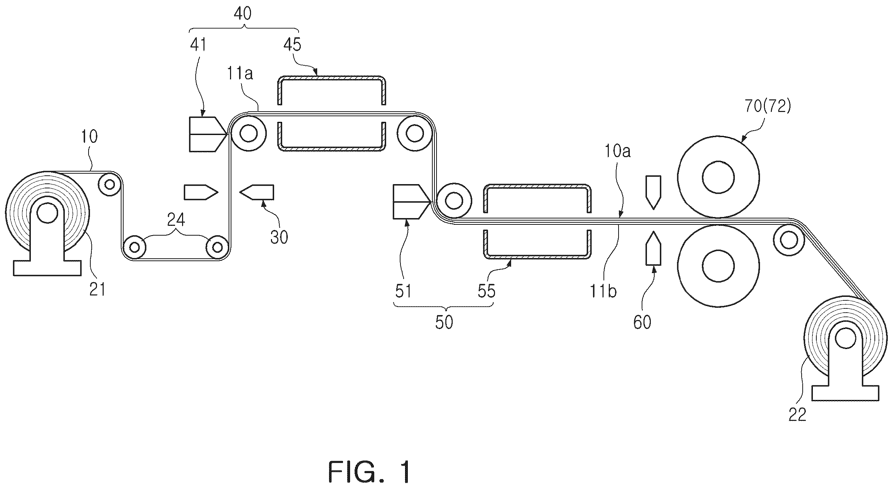

FIG. 1 is a view schematically illustrating an electrode sheet manufacturing apparatus according to an embodiment.

Referring to FIG. 1, an electrode sheet manufacturing apparatus 100 according to an embodiment may include an unwinder 21 on which a metal sheet 10 is wound, a rewinder 22 rotating in synchronization with the unwinder 21 and winding a metal sheet 10 coated with an electrode mixture, coating portions 40 and 50 coating electrode mixtures 11a and 11b to the metal sheet 10, a pressurizing portion 70 applying pressure to the coated electrode mixture, and heating portions 30 and 60 that heats the metal sheet 10. Additionally, a plurality of guide rolls 24 supporting the metal sheet 10 may be included for safe movement of the electrode sheet 10.

Hereinafter, for convenience of explanation, a state in which an electrode mixture is coated on a metal sheet is referred to as an electrode sheet 10a and described.

The unwinder 21 may supply a wound metal sheet 10, and the rewinder 22 may wind the electrode sheet 10a passing through a pressurizing roll 72.

In an embodiment, the unwinder 21 and the rewinder 22 may rotate in the same direction. However, the present disclosure is not limited thereto, and the unwinder 21 and the rewinder 22 may rotate in opposite directions as needed.

The coating portions 40 and 50 may include slot dies 41 and 51 and drying portions 45 and 55.

The slot dies 41 and 51 may supply the electrode mixtures 11a and 11b to one surface of the metal sheet 10 supplied from the unwinder 21, and for this purpose, the slot dies 41 and 51 may be provided with a slot through which the electrode mixtures 11a and 11b is discharged.

In an example embodiment, the slot dies 41 and 51 are fixedly disposed and the electrode mixtures 11a and 11b are coated with the moving metal sheet 10. However, the present disclosure is not limited thereto, and various modifications thereof may be made so that the metal sheet 10 is fixed, the slot dies 41 and 51 are moved, and the electrode mixtures 11a and 11b are coated.

The drying portions 45 and 55 may dry the electrode mixtures 11a and 11b supplied to the metal sheet 10. Accordingly, the drying portions 45 and 55 may be disposed at the rear end of the slot dies 41 and 51. The drying portions 45 and 55 may dry the electrode mixtures 11a and 11b by blowing (for example, cold air), but the present disclosure is not limited thereto.

The electrode sheet manufacturing apparatus of an embodiment may coat the electrode mixtures 11a and 11b on both surfaces of the metal sheet 10. To this end, two slot dies 41 and 51 and two drying portions 45 and 55 may be provided, respectively. Specifically, the electrode manufacturing apparatus of an embodiment may include a first slot die 41 coating the electrode mixture 11a on a first surface of the metal sheet 10, a first drying portion 45 drying the electrode mixture 11a, and a second slot die 51 coating the electrode mixture 11b on a second surface of the metal sheet 10, and a second drying portion 55 drying the electrode mixture 11b. The first slot die 41, the first drying portion 45, the second slot die 51, and the second drying portion 55 may be sequentially disposed in a direction in which the metal sheet 10 advances.

The pressurizing portion 70 may pressurize the electrode mixtures 11a and 11b coated on the metal sheet 10 at a constant pressure to form layers of electrode mixtures 11a and 11b having a constant thickness. Accordingly, the pressurizing portion 70 may be disposed at the rear end of the coating portions 40 and 50 and may be provided with a pressurizing roll 72.

The pressurizing rolls 72 may be disposed in pairs on each of both surfaces of the metal sheet 10 to pressurize the electrode mixtures 11a and 11b coated on the metal sheet 10. In an embodiment, a case in which one pair of pressurizing rolls 72 is provided is given as an example, but multiple pairs pressurizing rolls 72 may be disposed as needed.

The heating portions 30 and 60 may supply thermal energy to the metal sheet 10 to increase a temperature of the metal sheet 10. The heat energy supplied from the heating portions 30 and 60 may be directly/indirectly transferred to the metal sheet 10, and thus, an elongation of a region in which the temperature of the metal sheet 10 is increased may increase.

The heating portions 30 and 60 of an embodiment may be provided with a non-contact heat source. For example, the heating portions 30 and 60 may heat the metal sheet 10 in an induction heating manner in a state in which the heating portions 30 and 60 are spaced apart from the metal sheet 10 by a certain distance. However, the present disclosure is not limited thereto, and various modifications may be made as long as the heat energy may be transferred to the metal sheet 10, such as a case of contacting the metal sheet 10 and heating the metal sheet 10.

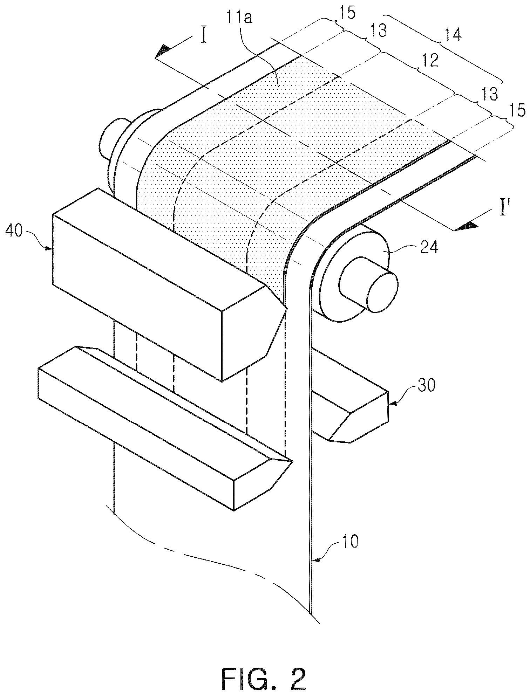

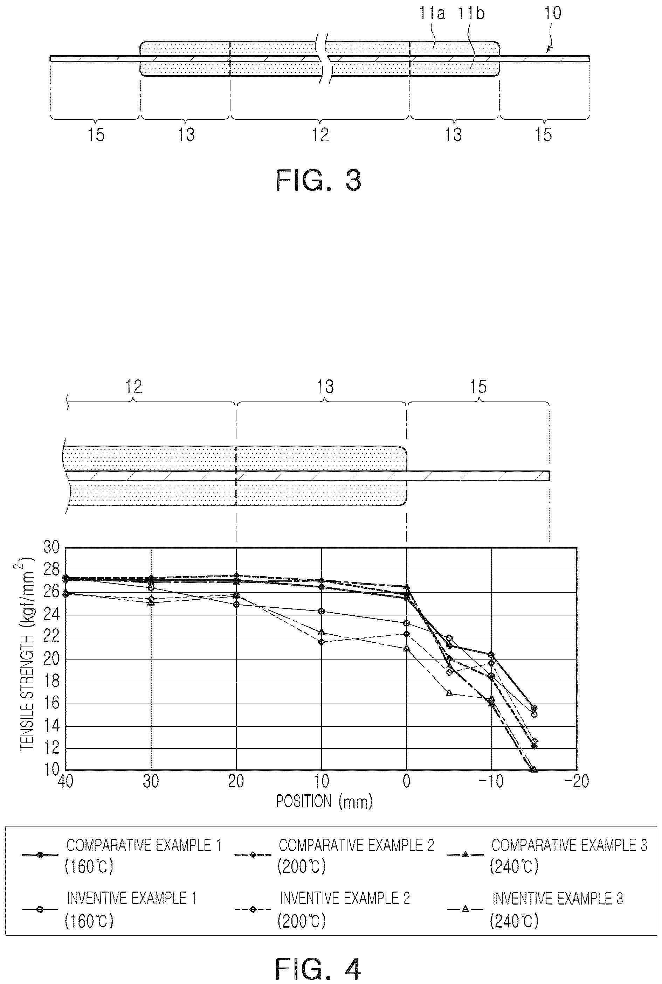

FIG. 2 is a perspective view partially illustrating the manufacturing apparatus of FIG. 1, and FIG. 3 is a cross-sectional view of an electrode sheet taken along line I-I' of FIG 2.

Referring to FIG. 2 and FIG. 3, together with FIG. 1, the electrode mixtures 11a and 11b may be coated on at least one surface of both surfaces of the metal sheet 10. As illustrated in FIG. 2, the electrode mixtures 11a and 11b may be coated only to a certain region of one surface of the metal sheet 10, not an entire surface thereof, and thus, a non-coated region 15 in which only the metal sheet 10 exists may be formed on both sides of the electrode mixtures 11a and 11b.

However, as heat is applied to the metal sheet 10 during an electrode sheet manufacturing process, the elongation of the metal sheet 10 may vary between a portion (14, hereinafter referred to as a stack portion) coated with the electrode mixtures 11a and 11b and the non-coated portion 15, a portion not coated with the electrode mixtures 11a and 11b, which may cause a problem in that a boundary portion between the stack portion 14 and the non-coated portion 15 may be easily broken.

To this end, the heating portions 30 and 60 of an embodiment may include a first heating portion 30 disposed in a front end of the slot dies 41 and 51 and a second heating portion 60 disposed in a front end of the pressurizing portion 70.

The first heating portion 30 may be disposed between the unwinder 21 and the first slot die 41 to partially the heat the metal sheet 10 before the electrode mixtures 11a and 11b are coated on the metal sheet 10. Additionally, the second heating portion 60 is disposed between the second drying portion 55 and the pressurizing portion 70 to completely the heat the metal sheet 10 coated with the electrode mixtures 11a and 11b.

The second heating portion 60 heats the metal sheet 10 coated with the electrode mixtures 11a and 11b, but since the electrode mixtures 11a and 11b interferes with the transfer of heat energy, the metal sheet 10 of the stack portion 14 has a lower heat energy transfer rate than the non-coated portion 15. Accordingly, since the heat energy concentrates on the non-coated portion 15, a difference in elongation between the non-coated portion 15 and the stack portion 14 may increase in this process.

Due to a thickness difference caused by the electrode mixtures 11a and 11b, the pressurizing roll 72 of the pressurizing portion 70 may only apply pressure to the stack portion 14 of the electrode sheet 10a. Accordingly, the amounts of pressure applied to the stack portion 14 and the non-coated portion 15 in a process of pressurizing the electrode sheet 10a by the pressurizing roll 72 may be different from each other.

As the difference in elongation between the stack portion 14 and the non-coated portion 15 increases, the metal sheet 10 may be easily broken during the pressurizing process.

Accordingly, in the electrode sheet manufacturing apparatus of an embodiment, in order to minimize the breakage of the metal sheet 10 in the pressurizing portion 70, the first heating portion 30 is disposed in the front end of the coating portion 40.

The first heating portion 30 may be disposed before the electrode mixtures 11a and 11b are coated on the metal sheet 10 to heat the metal sheet 10, and may intensively heat a region corresponding to the stack portion 14 based on a boundary between the stack portion 14 and the non-coated portion 15.

In the metal sheet 10 of an embodiment, the stack portion 14 coated with the electrode mixtures 11a and 11b may divided into a first region 12 and a second region 13. Here, the first region 12 may refer to a region disposed along a center of the stack portion 14, and the second region 13 may refer to a region between the first region 12 and the non-coated portion 15. Accordingly, two second regions 13 may be disposed on both sides of the first region 12.

In an embodiment, the second region 13 may be formed to have a width of about 30 mm from the boundary between the stack portion 14 and the non-coated portion 15, but the present disclosure is not limited thereto. Accordingly, the first region 12 may be defined as the remaining region excluding the second region 13, among the regions corresponding to the stack portion 14, and the second region 13 may formed along each side of the stack portion 14 in which the stack portion 14 is in contact with the non-coated portion 15.

The first heating portion 30 may configured to intensively heat the second region 13. Since the metal sheet 10 has high thermal conductivity, even if the second region 13 is heated, the thermal energy may be diffused to the first region 12 and the non-coated portion 15. However, since the thermal energy concentrates on the second region 13, the metal sheet 10 passing through the first heating portion 30 may have the greatest increase in elongation of the second region 13. Since the elongation of the metal is inversely proportional to the tensile strength, the metal sheet 10 passing through the first heating portion 30 may have the lowest tensile strength in the second region 13. The tensile strength of the electrode sheet 10a described below substantially refers to tensile strength of the metal sheet 10.

While the metal sheet 10 passing through the first heating portion 30 passes through the coating portions 40 and 50, the electrode mixtures 11a and 11b are coated on one surface or both surfaces of the metal sheet 10, and then, the metal sheet 10 passes through the second heating portion 60 and enters the pressurizing portion 70.

The second heating portion 60 may heat the electrode sheet 10a at the same temperature as the first heating portion 30, in which case the second heating portion 60 may heat the electrode sheet 10a during a longer time than the first heating portion 30. However, the present disclosure is not limited thereto, and various modifications may be made, such as heating at a higher temperature than the first heating portion 30.

As described above, the second heating portion 60 may heat the entire metal sheet 10 coated with the electrode mixtures 11a and 11b, but since the electrode mixtures 11a and 11b interferes with the transfer of heat energy, the heat energy may concentrate on the non-coated portion 15.

Accordingly, the tensile strength of the non-coated portion 15 of the electrode sheet 10a passing through the second heating portion 60 may be lower than the tensile strength of the second region 13 described above. Accordingly, the tensile strength of the electrode sheet 10a passing through the second heating portion 60 may be the greatest in the first region 12, and may gradually decrease in the order of the second region 13 and the non-coated portion 15.

With an increase in a difference in tensile strength between the second region 13 and the non-coated portion 15, the possibility of breakage of the metal sheet 10. Accordingly, the electrode sheet manufacturing apparatus of an embodiment uses the first heating portion 30 to minimize the difference in tensile strength between the second region 13 and the non-coated portion 15, so that the tensile strength of the second region 13 is formed to be lower than the tensile strength of the first region 12 and higher than the tensile strength of the non-coated portion 15.

Table 1 illustrates data obtained by measuring the tensile strength of the metal sheet passing through the second heating portion, and FIG. 4 is a graph according to Table 1. Referring to FIG. 4, in the second region 13, tensile strength of the electrode sheet formed to have a width of 20 mm was measured by defining a boundary between the second region 13 and the non-coated portion 15 as 0.

The tensile strength of the second region 13 illustrated in Table 1 is tensile strength of the center of the second region 13 in FIG. 4. Additionally, in Table 1, the tensile strength of the first region 12 is a tensile strength in a position of 30 mm in FIG. 4. Additionally, as illustrated in FIG. 4, the tensile strength of the non-coated portion 15 was measured at three points of the electrode sheet in the width direction. Here, a non-coated portion #1 is a tensile strength measured at a range of 5 mm from the boundary between the second region 13 and the non-coated portion 15, a non-coated portion #2 is a tensile strength measured at a range of 5 mm to 10 mm from the boundary, and a non-coated portion #3 is a tensile strength measured at a range of 10 mm to 15 mm from the boundary. For example, when the boundary between the second region 13 and the non-coated portion 15 is defined as 0, the non-coated portion #1 is a tensile strength measured in a position of -5 mm, the non-coated portion #2 is the tensile strength measured in a position of -10 mm from the boundary, and the non-coated portion #3 is the tensile strength measured in a position of -15 mm from the boundary.

**Table 1:**

| Division | Heating Temperatur e | tensile strength (kgf/mm²) | | | | |
|---|---|---|---|---|---|---|
| | | First Region | Second Region | non-coated portion #1 | non-coated portion #2 | non-coated portion #3 |
| Comparative Example 1 | 160°C | 27.1 | 26.5 | 21.3 | 20.4 | 15.6 |
| Comparative Example 2 | 200°C | 27.3 | 27.1 | 20.1 | 18.4 | 12.1 |
| Comparative Example 3 | 240°C | 26.9 | 27.1 | 19.5 | 16.0 | 9.4 |
| Inventive Example 1 | 160°C | 26.4 | 24.3 | 21.9 | 18.5 | 15.1 |
| Inventive Example 2 | 200°C | 25.4 | 21.6 | 18.9 | 19.7 | 12.6 |
| Inventive Example 3 | 240°C | 25.1 | 22.4 | 17.0 | 16.5 | 10.1 |

In Table 1 and FIG. 4, Comparative Examples 1, 2 and 3 are examples of an electrode sheet manufacturing apparatus that includes only the second heating portion 60 without the first heating portion 30, and Inventive Examples 4, 5 and 6 are examples of an electrode sheet manufacturing apparatus of an embodiment that includes both a first heating portion 30 and a second heating portion 60.

Meanwhile, in Table 1, the heating temperature refers to a maximum temperature of the electrode sheet due to the first heating portion 30 and the second heating portion 60.

Referring to Table 1 and FIG. 4 together, it may be seen that in Comparative Examples 1, 2 and 3 that do not include the first heating portion 30, the tensile strength of the first region 12 and the second region 13 does not have a large difference, and the tensile strength of the second region 13 and the tensile strength of the non-coated portion 15 are greatly different. This may be understood as a result of the heat energy concentrating on the non-coated portion 15 through the second heating portion 60.

On the other hand, since Inventive Examples 4, 5 and 6 including the first heating portion 30 preemptively lower the tensile strength of the second region 13 through the first heating portion 30, even if the heat energy concentrates on the non-coated portion 15 through the second heating portion 60, a difference between the tensile strength of the second region 13 and the tensile strength of the non-coated portion 15 may minimized.

When the tensile strength of the second region 13 has an intermediate value between the tensile strength of the first region 12 and the tensile strength of the non-coated portion 15, the tensile strength of the metal sheet 10 may be gradually changed, so that the aforementioned breakage may minimized. However, it is not practically easy to adjust the tensile strength of the second region 13 to the intermediate value mentioned above. Accordingly, in an embodiment, the tensile strength of the second region 13 may configured to be included in an intermediate range when a gap between the tensile strength of the first region 12 and the tensile strength of the non-coated portion 15 is divided into three ranges. However, the configuration of the present disposed is not limited thereto.

Additionally, in an embodiment, in Comparative Examples 1, 2 and 3, a difference in tensile strength between the second region 13 and the non-coated portion 15 was measured to be 5 kgf/mm² or more, while in Inventive Examples, 1 and 2, the difference in tensile strength was measured to be 5 kgf/mm² or less. In Inventive Example 3, although the first heating portion 30 is included, since the tensile strength of the non-coated portion 15 is excessively lowered due to the high heating temperature, the difference in tensile strength between the second region 13 and the non-coated portion 15 is formed to be 5 kgf/mm² or more. Accordingly, Inventive Example 3 may cause problems such as sticking, which will be described below. Accordingly, the electrode sheet manufacturing apparatus according to an embodiment may configured to form a difference in tensile strength between the second region 13 and the non-coated region 15 to be 5 kgf/mm² or less. This may be implemented by controlling the heat energy provided from the first heating portion 30 to the metal sheet 10.

Meanwhile, an electrode assembly of the battery cell is formed by stacking a plurality of electrode sheets. In this process, the non-coated region 15 may be partially removed through a punching process and may then be welded to an electrode lead. In this process, the second region 13 may also be partially punched together with the non-coated region 15. However, when the tensile strength of the second region 13 is somewhat high, cracks may easily occur in the second region 13 in a process of punching the second region 13. In the case of Comparative Examples 1, 2 and 3 illustrated in FIG. 4, at least one crack occurred in all of the processes of punching approximately 5,000 times. On the other hand, in Inventive Examples 1, 2 and 3 in which the tensile strength of the second region 13 was formed to be 26 kgf/mm² or less, it was confirmed that no cracks occurred. Accordingly, when the tensile strength of the second region 13 is formed to be 26 kgf/mm² or less, it may be seen that crack occurrence is minimized.

Additionally, when the tensile strength of the non-coated portion 15 is excessively reduced by heating the metal sheet 10, that is, when the elongation of the metal sheet 10 excessively increases, the non-coated portion 15 may be stuck to a welding tip or the like, in a process of welding the non-coated portion 15. Referring to FIG. 4, in the case of Comparative Example 3 and Inventive Example 3, the tensile strength of an outermost non-coated portion 15 is approximately 10 kgf/mm², in which case it was confirmed that the sticking of the non-coated portion 15 significantly increased. On the other hand, in Comparative Example 2 and Inventive Example 5 in which the tensile strength of the outermost portion of the non-coated portion 15 is approximately 12 kgf/mm², it was confirmed that no sticking occurred.

Accordingly, the electrode sheet manufacturing apparatus of an example embodiment may form the tensile strength of the non-coated portion 15 of the electrode sheet 10a passing through the first and second heating portions 30 and 60 to be 12 kgf/mm² or more.

Hereinafter, a method of manufacturing an electrode sheet using an electrode sheet manufacturing apparatus according to an embodiment will be described.

First, a first heating operation in which, while a metal sheet 10 supplied from an unwinder 21 passes through a first heating portion 30, a second region 13 is heated at a constant temperature, and a coating operation in which electrode mixtures 11a and 11b are coated on at least one surface of the metal sheet 10 may be sequentially performed. Accordingly, the metal sheet 10 may enter coating portions 40 and 50 in a state in which an elongation of the second region 13 is increased as compared to other portions.

When the metal sheet 10 enters the coating portions 40 and 50, the electrode mixtures 11a and 11b may be coated on one surface or both surfaces of the metal sheet 10 and may then be dried.

Then, a second heating operation of reheating the electrode sheet 10a passing through the coating portions 40 and 50 and a pressurizing operation of applying pressure to the electrode mixtures 11a and 11b coated on the metal sheet 10 may sequentially performed.

Referring to FIG. 1, in an embodiment, the electrode sheet 10a passing through the coating portions 40 and 50 passes through the second heating portion 60 and the pressurizing section 70 continuously. However, the configuration of the present invention is not limited thereto, and the second heating portion 60 and the pressurizing section 70 may be configured as processes independent of the aforementioned processes.

For example, the first heating portion 30 and the coating portions 40 and 50 may be formed in a first process, and the second heating portion 60 and the pressurizing section 70 may be formed in a second process distinct from the first process. In this case, each of the first process and the second process may include an unwinder 21 and a rewinder 22, and an electrode sheet 10a passing through the coating portions 40 and 50 in the first process may be wound on the rewinder 22. Additionally, the above-described wound electrode sheet may enter the second process, and thus, the electrode sheet 10a may be supplied to the second heating portion 60 through the unwinder 21 disposed in front of the second heating portion 60.

In the case of the second heating operation, since the heat energy supplied from the second heating portion 60 concentrates on the non-heated section 15, the metal sheet 10 may pass through the pressurizing section 70 in a state in which the elongation of the non-heated section 15 is increased as compared to the elongation of the second region 13.

In this case, in order to minimize breakage of the metal sheet 10, the metal sheet 10 passing through the second heating portion 60 may formed so that the difference in tensile strength between the second region 13 and the non-heated section 15 is 5 kgf/mm² or less. Additionally, in order to prevent the non-coated portion 15 from being stuck in a subsequent welding process of the non-coated portion 15, the non-coated portion 15 of the metal sheet 10 passing through the second heating portion 60 may formed to have tensile strength of 12 kgf/mm² or more, and in order to prevent cracks from occurring in the second region 13 in a punching process, the tensile strength of the second region 13 may formed to be 26 kgf/mm² or less.

The electrode sheet manufactured through the electrode sheet manufacturing apparatus described above may reduce the difference in tensile strength between the electrode layer and the non-coated portion, thereby minimizing the breakage of the non-coated portion of the electrode sheet or an occurrence of cracks of the electrode layer in the battery cell manufacturing process.

The electrode sheet manufactured through the electrode sheet manufacturing apparatus of the present disclosure may be used as an electrode assembly cut to a certain width in a subsequent process, and then stacked or wound and provided in a battery cell.

For example, the electrode assembly may be accommodated in a case to form a lithium secondary battery. Here, the lithium secondary battery may include a lithium-ion secondary battery, a lithium polymer secondary battery, or a lithium-ion polymer secondary battery.

Additionally, the lithium secondary battery described above may be used not only as a battery cell used as a power source for a small device, but also as a unit battery in a medium-sized battery module or a large-sized battery module including a plurality of battery cells.

Additionally, according to the present disclosure, a battery pack including the battery module described above as a power source for a medium-sized device or a large-sized device may be provided. The medium-sized device or large-sized device described above may include electric vehicles including an electric vehicle (EV), a hybrid electric vehicle (HEV) and a plug-in hybrid electric vehicle (PHEV), and power storage devices, but the present disclosure is not limited thereto.

The content described above is merely an example of applying the principles of the present disclosure.

The present disclosure also relates to the following aspects.

Aspect 1) An electrode sheet manufacturing apparatus, comprising: a first heating portion partially heating a metal sheet; a coating portioncoating an electrode mixture on at least one surface of the metal sheet; a second heating portion heating the metal sheet coated with the electrode mixture; and a pressurizing portion applying pressure to the metal sheet coated with the electrode mixture heated in the second heating portion.

Aspect 2) In aspect 1, wherein the metal sheet includes a stack portion, a region coated with the electrode mixture, and a non-coated portion, a region not coated with the electrode mixture, and the first heating portion heats a portion corresponding to the stack portion.

Aspect 3) In aspect 2, wherein the stack portion includes: a first region disposed along a center of the stack portion; and a second region disposed between the first region and the non-coated portion, and the first heating portion heats the second region.

Aspect 4) In any one of aspects 1 to 3, wherein the first heating portion includes a non-contact heat source heating the metal sheet in an induction heating manner.

Aspect 5) In any one of aspects 1 to 3, wherein the first heating portion heats the metal sheet to the same temperature as the second heating portion.

Aspect 6) In any one of aspects 1 to 3, wherein the coating portionincludes: a slot die supplying the electrode mixture to the metal sheet; and a drying portion drying the electrode mixture supplied to the metal sheet.

Aspect 7) In aspect 6, wherein the pressurizing portion includes a pair of pressurizing rolls disposed on both surfaces of the metal sheet coated with the electrode mixture and applying pressure to the electrode mixture.

Aspect 8) An electrode sheet manufacturing method, comprising: a first heating operation of partially heating a metal sheet supplied from an unwinder; a coating operation of coating an electrode mixture on at least one surface of the metal sheet; a second heating operation of heating the metal sheet coated with the electrode mixture; and a pressurizing operation of applying pressure to the electrode mixture coated on the metal sheet.

Aspect 9) In aspect 8, wherein the metal sheet includes a stack portion, a region coated with the electrode mixture, and a non-coated portion, a region not coated with the electrode mixture, the stack portion includes a first region disposed along a center of the stack portion, and a second region disposed between the first region and the non-coated portion, and the first heating operation is an operation of heating the second region.

Aspect 10) In aspect 8 or 9, wherein the second heating operation is an operation of heating the metal sheet for a period of time the same as or longer than the period of time of the first heating operation.

Aspect 11) In aspect 9, wherein the metal sheet includes aluminum, and after the second heating operation, a difference in tensile strength between the second region and the non-coated region is formed to be 5 kgf/mm2 or less.

Aspect 12) In aspect 9, wherein the metal sheet includes aluminum, and after the second heating operation, tensile strength of the non-coated region is lower than tensile strength of the second region and is formed to be 12 kgf/mm2 or more.

Aspect 13) In aspect 9, wherein the metal sheet includes aluminum, and after the second heating operation, tensile strength of the second region is higher than tensile strength of the non-coated region and is formed to be 26 kgf/mm2 or less.

Aspect 14) In any one aspects 8 to 13, wherein the metal sheet includes a stack portion, a region coated with the electrode mixture, and a non-coated portion, a region not coated with the electrode mixture, and the stack portion includes a first region disposed along a center of the stack portion, and a second region disposed between the first region and the non-coated portion, and in the metal sheet, a difference in tensile strength between the second region and the non-coated portion is 5 kgf/mm2 or less.

## Claims

1. An electrode sheet manufacturing apparatus, comprising:
a first heating portion partially heating a metal sheet;
a coating portioncoating an electrode mixture on at least one surface of the metal sheet;
a second heating portion heating the metal sheet coated with the electrode mixture; and
a pressurizing portion applying pressure to the metal sheet coated with the electrode mixture heated in the second heating portion.

2. The electrode sheet manufacturing apparatus of claim 1, wherein the metal sheet includes a stack portion, a region coated with the electrode mixture, and a non-coated portion, a region not coated with the electrode mixture, and
the first heating portion heats a portion corresponding to the stack portion.

3. The electrode sheet manufacturing apparatus of claim 2, wherein the stack portion includes:
a first region disposed along a center of the stack portion; and
a second region disposed between the first region and the non-coated portion, and
the first heating portion heats the second region.

4. The electrode sheet manufacturing apparatus any one of claims 1 to 3, wherein the first heating portion includes a non-contact heat source heating the metal sheet in an induction heating manner.

5. The electrode sheet manufacturing apparatus any one of claims 1 to 3, wherein the first heating portion heats the metal sheet to the same temperature as the second heating portion.

6. The electrode sheet manufacturing apparatus any one of claims 1 to 3, wherein the coating portionincludes:
a slot die supplying the electrode mixture to the metal sheet; and
a drying portion drying the electrode mixture supplied to the metal sheet.

7. The electrode sheet manufacturing apparatus of claim 6, wherein the pressurizing portion includes a pair of pressurizing rolls disposed on both surfaces of the metal sheet coated with the electrode mixture and applying pressure to the electrode mixture.

8. An electrode sheet manufacturing method, comprising:
a first heating operation of partially heating a metal sheet supplied from an unwinder;
a coating operation of coating an electrode mixture on at least one surface of the metal sheet;
a second heating operation of heating the metal sheet coated with the electrode mixture; and
a pressurizing operation of applying pressure to the electrode mixture coated on the metal sheet.

9. The electrode sheet manufacturing method of claim 8, wherein the metal sheet includes a stack portion, a region coated with the electrode mixture, and a non-coated portion, a region not coated with the electrode mixture,
the stack portion includes a first region disposed along a center of the stack portion, and a second region disposed between the first region and the non-coated portion, and
the first heating operation is an operation of heating the second region.

10. The electrode sheet manufacturing method of claim 8 or 9, wherein the second heating operation is an operation of heating the metal sheet for a period of time the same as or longer than the period of time of the first heating operation.

11. The electrode sheet manufacturing method of claim 9, wherein the metal sheet includes aluminum, and after the second heating operation, a difference in tensile strength between the second region and the non-coated region is formed to be 5 kgf/mm² or less.

12. The electrode sheet manufacturing method of claim 9, wherein the metal sheet includes aluminum, and after the second heating operation, tensile strength of the non-coated region is lower than tensile strength of the second region and is formed to be 12 kgf/mm² or more.

13. The electrode sheet manufacturing method of claim 9, wherein the metal sheet includes aluminum, and after the second heating operation, tensile strength of the second region is higher than tensile strength of the non-coated region and is formed to be 26 kgf/mm² or less.

14. An electrode sheet manufactured by the electrode sheet manufacturing method described in any one of claims 8 to 13,
wherein the metal sheet includes a stack portion, a region coated with the electrode mixture, and a non-coated portion, a region not coated with the electrode mixture, and the stack portion includes a first region disposed along a center of the stack portion, and a second region disposed between the first region and the non-coated portion, and
in the metal sheet, a difference in tensile strength between the second region and the non-coated portion is 5 kgf/mm² or less.
